# EUROPEAN PATENT APPLICATION

(11) **EP 4 851 762 A1**
(43) Date of publication of application: **09.12.2026**
(21) Application number: 24922266.2
(22) Date of filing: 01.02.2024
(51) Int. Cl.: G06F 3/0354

(54) **PERIPHERAL EQUIPMENT AND SYSTEM**

(71) Applicant: Nintendo Co., Ltd., Kyoto-shi, Kyoto 601-8501 (JP)
(72) Inventor: KORIYAMA, Kazuhiko, Kyoto-shi, Kyoto 601-8501 (JP); KITANO, Yasuhisa, Kyoto-shi, Kyoto 601-8501 (JP); EBIHARA, Kazuki, Kyoto-shi, Kyoto 601-8501 (JP); IWAKI, Eisuke, Kyoto-shi, Kyoto 601-8501 (JP)
(74) Representative: Bardehle Pagenberg Partnerschaft mbB Patentanwälte Rechtsanwälte
(86) International application number: PCT/JP2024/003316
(87) International publication number: WO 2025/163860

(57) **Abstract**

A peripheral device is a peripheral device to which an input device is removably attachable. The input device includes a projection and a mouse operation sensor. The projection projects from a side surface, is removably attached to a game device recess located at a game device, and is provided with a first opening at a top surface. The mouse operation sensor detects through the first opening, movement with respect to a tracking surface to which the top surface is opposed. The peripheral device includes a recess with which the projection is to removably be matched, a tracking part motion of which is detected by the mouse operation sensor of the input device attached to the peripheral device, and an operation part configured to cause motion of the tracking part by being operated by a user.

## Description

### TECHNICAL FIELD

The present disclosure relates to a peripheral device and a system.

### BACKGROUND ART

Japanese Patent Laying-Open No. 2018-57650 (PTL 1) discloses an attachment to be attached to an input device.

### CITATION LIST

### PATENT LITERATURE

PTL 1: Japanese Patent Laying-Open No. 2018-57650

### SUMMARY OF INVENTION

### TECHNICAL PROBLEM

An object of the present disclosure is to provide a novel peripheral device to which an input device is to be attached.

### SOLUTION TO PROBLEM

A peripheral device according to the present disclosure is a peripheral device to which an input device is removably attachable. The input device includes a projection and a mouse operation sensor. The projection projects from a side surface and is removably attachable to a game device recess located at a game device, and is provided with a first opening at a top surface. The mouse operation sensor is configured to detect through the first opening, movement with respect to a tracking surface to which the top surface is opposed. The peripheral device includes a recess with which the projection is to removably be matched, a tracking part motion of which is detected by the mouse operation sensor of the input device attached to the peripheral device, and an operation part configured to cause motion of the tracking part by being operated by a user.

According to the peripheral device according to the above, a second opening opposed to the first opening of the projection matched with the recess may be located at a bottom of the recess. At least a part of the tracking part may be located inside the peripheral device and detected by the mouse operation sensor through the second opening.

According to the peripheral device according to the above, the tracking part may rotate in accordance with an operation on the operation part.

According to the peripheral device according to the above, the tracking part may be provided with a surface that intersects a rotation axis. Incident light from the second opening may be reflected at the surface.

According to the peripheral device according to the above, the tracking part may be provided with a surface of a radially outer periphery of a rotating body that rotates around a rotation axis. Incident light from the second opening may be reflected at the surface.

According to the peripheral device according to the above, the input device may include a button located at the top surface of the projection. The operation part may be configured to be pushed and turned by the user. The peripheral device may include a pressing part configured to press the button as a result of pressing of the operation part.

According to the peripheral device according to the above, the button may be a member configured to be attracted to a magnet. A member to be attracted to the button may be located at a bottom of the recess.

According to the peripheral device according to the above, the input device may include a button located at the top surface of the projection. The button may be a member to be attracted to a magnet. A member to be attracted to the button may be located at a bottom of the recess.

According to the peripheral device according to the above, the input device may include a pusher configured to project from the top surface of the projection in accordance with an operation by the user. The recess may be provided with an abutment area of a recess bottom surface, the abutment area being configured to abut on the pusher.

According to the peripheral device according to the above, the recess may be configured such that the mouse operation sensor is unable to detect movement of the tracking part while the pusher that has fully projected abuts on the abutment area.

According to the peripheral device according to the above, a lens may be located between the second opening and the tracking part.

A system according to the present disclosure includes the peripheral device according to the above and the input device to be attached to the peripheral device.

### BRIEF DESCRIPTION OF DRAWINGS

Fig. 1A is a schematic front view showing a configuration of a game device.
Fig. 1B is an exploded schematic perspective view showing a configuration of a right side surface of the game device.
Fig. 2 is a schematic six-view drawing showing a configuration of a first input device.
Fig. 3 is a schematic perspective view showing the configuration of the first input device.
Fig. 4 is a schematic six-view drawing showing a configuration of a second input device.
Fig. 5 is a schematic front view showing a state of use of the first input device as a mouse.
Fig. 6 is a schematic right side view showing the state of use of the first input device as the mouse.
Fig. 7 is a diagram showing an exemplary state in which an input device is operated as being horizontally held.
Fig. 8 is a diagram showing an exemplary state in which the input device is operated as being vertically held.
Fig. 9 is a schematic front view showing a configuration of an exemplary information processing apparatus.
Fig. 10 is a schematic front view showing a state in which each of the first input device and the second input device has been removed from the game device.
Fig. 11 is a diagram showing an exemplary state in which the information processing apparatus is operated as being held.
Fig. 12 is a schematic perspective view showing a configuration of a peripheral device according to a first embodiment.
Fig. 13 is a schematic bottom view showing the configuration of the peripheral device according to the first embodiment.
Fig. 14 is a schematic perspective view showing a configuration of a system according to the first embodiment.
Fig. 15 is a schematic cross-sectional view showing a configuration in which the input device has been attached to the peripheral device according to the first embodiment.
Fig. 16 is a schematic diagram showing relation between detection accuracy of a mouse operation sensor and a distance between the mouse operation sensor and a tracking surface.
Fig. 17 is a schematic rear view showing a state of removal of the second input device from the peripheral device.
Fig. 18 is a schematic cross-sectional view showing a configuration in which the input device has been attached to the peripheral device according to a modification of the first embodiment.
Fig. 19 is a schematic front view showing a configuration of a peripheral device according to a second embodiment.
Fig. 20 is a schematic plan view showing the configuration of the peripheral device according to the second embodiment.
Fig. 21 is a partial schematic cross-sectional view showing a configuration of a system according to the second embodiment.
Fig. 22 is a partial schematic cross-sectional view showing a state in which an operation part has been pressed.
Fig. 23 is a schematic diagram showing a configuration of a second gear.

### DESCRIPTION OF EMBODIMENTS

An embodiment of the present disclosure (which is also referred to as the present embodiment) will be described in detail with reference to the drawings. The same or corresponding elements in the drawings have the same reference characters allotted and description thereof will not be repeated.

### <Game Device>

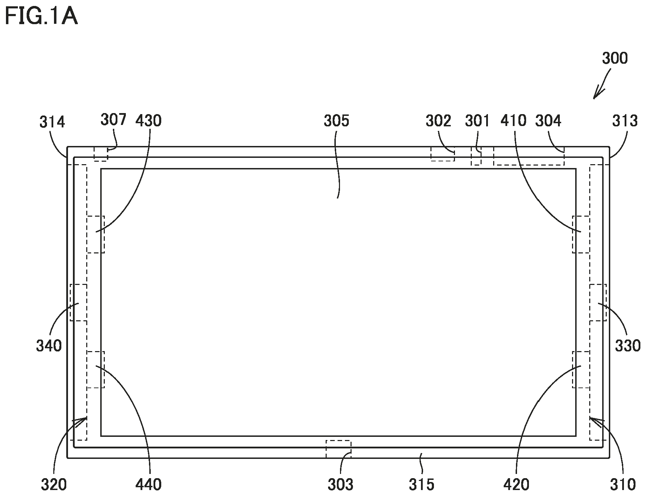

Fig. 1A is a schematic front view showing a configuration of a game device. As shown in Fig. 1A, a game device 300 includes a main body front surface 315, a main body right side surface 313, and a main body left side surface 314. Main body front surface 315 is provided with a display 305. Display 305 may be any display device. A touch panel may be located on a display surface of display 305.

Game device 300 includes a lower terminal 303. Lower terminal 303 is, for example, a terminal for communication with an external apparatus. Lower terminal 303 implements, for example, a universal serial bus (USB) connector. Game device 300 may externally be supplied with electric power through lower terminal 303. Game device 300 may output an image to the outside through lower terminal 303. Game device 300 does not have to include display 305 and an image may be shown only at an external display. When game device 300 is placed on a cradle from a side of a main body lower side surface, lower terminal 303 may be connected to a terminal of the cradle.

Game device 300 includes an upper terminal 302. Game device 300 may include a power button 307, a storage medium slot 304, or an audio input and output terminal 301. Game device 300 may perform game processing by executing a game application stored in a storage medium inserted in storage medium slot 304.

As shown in Fig. 1A, a game device recess 310 is located at main body right side surface 313. At game device recess 310, a first plug connector 330, a first magnetic element 410, and a second magnetic element 420 are located. First magnetic element 410 and second magnetic element 420 each include a magnet. In a longitudinal direction of game device recess 310, first plug connector 330 is located between first magnetic element 410 and second magnetic element 420.

Main body left side surface 314 is located opposite to main body right side surface 313 with respect to the front surface of game device 300. Main body left side surface 314 is similar in configuration to main body right side surface 313. For example, a game device recess 320 is located at main body left side surface 314. At game device recess 320, a second plug connector 340, a third magnetic element 430, and a fourth magnetic element 440 are located. Third magnetic element 430 and fourth magnetic element 440 each include a magnet. In the longitudinal direction of game device recess 320, second plug connector 340 is located between third magnetic element 430 and fourth magnetic element 440.

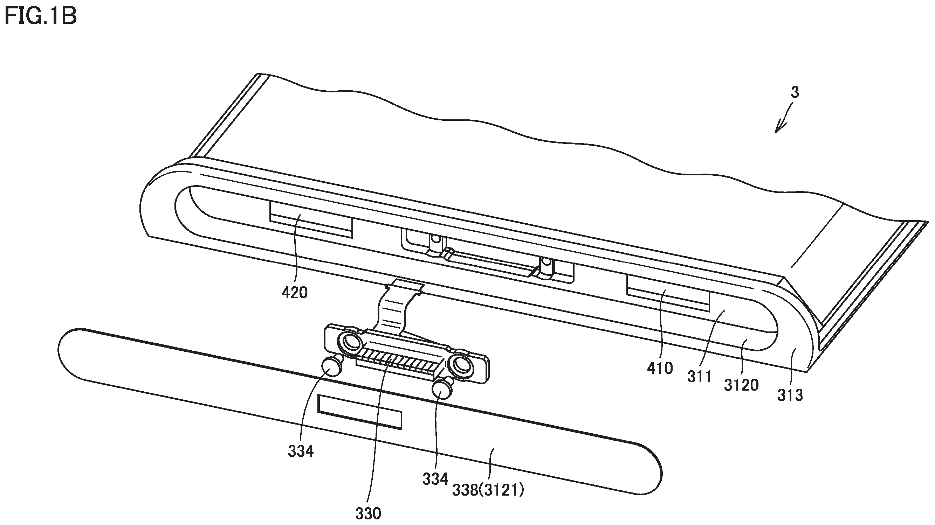

Fig. 1B is an exploded schematic perspective view showing a configuration of the right side surface of the game device. Game device 300 includes a cover member 338 and a set of shoulder screws 334. Main body right side surface 313 is recessed to form a base surface 311 which serves as a base of a bottom surface of game device recess 310 and a game-device-side inner peripheral surface 3120. Base surface 311 is substantially the same in shape as cover member 338. Though game-device-side inner peripheral surface 3120 surrounds the entire periphery of base surface 311 in the present example, it does not have to be configured to surround the entire periphery. In the present example, game device recess 310 opens to the right and does not open in an upward-downward direction and a front-rear direction. Game-device-side inner peripheral surface 3120 is contiguous to base surface 311 and main body right side surface 313. Game-device-side inner peripheral surface 3120 has an upper end (a right side end of game device 300) connected to main body right side surface 313. From another point of view, game device recess 310 is recessed relative to main body right side surface 313. In the present example, game-device-side inner peripheral surface 3120 is generally in a shape of an outer peripheral surface of a frustum of a pyramid, with a game-device-side bottom surface 3121 being defined as an upper base side. In other words, game-device-side inner peripheral surface 3120 is in a shape spreading from the bottom surface toward the upper end. As will be described later, an end area in the longitudinal direction may be rounded. From another point of view, when game device recess 310 is viewed from a side of the opening (that is, the right side), game-device-side bottom surface 3121 and game-device-side inner peripheral surface 3120 that surrounds game-device-side bottom surface 3121 are seen. In another manner, game-device-side inner peripheral surface 3120 may extend in parallel to a left-right direction. The shape of game device recess 310 is not limited to the shape of the outer peripheral surface of the frustum of the pyramid. By way of example, game device recess 310 may be in a shape of an outer peripheral surface of a frustum of a cone or a shape of an outer peripheral surface of a parallelepiped. Game-device-side inner peripheral surface 3120 may be in a shape not flaring outward, from game-device-side bottom surface 3121 toward the upper end. In other words, game-device-side inner peripheral surface 3120 may be inclined outward toward the upper end, or does not have to be inclined inward and outward. From another point of view, when game device recess 310 is viewed from the side of the opening (that is, the right side), at least the entire game-device-side bottom surface 3121 may be seen. An opposite side of game device 300 is also similarly configured.

### <First Input Device>

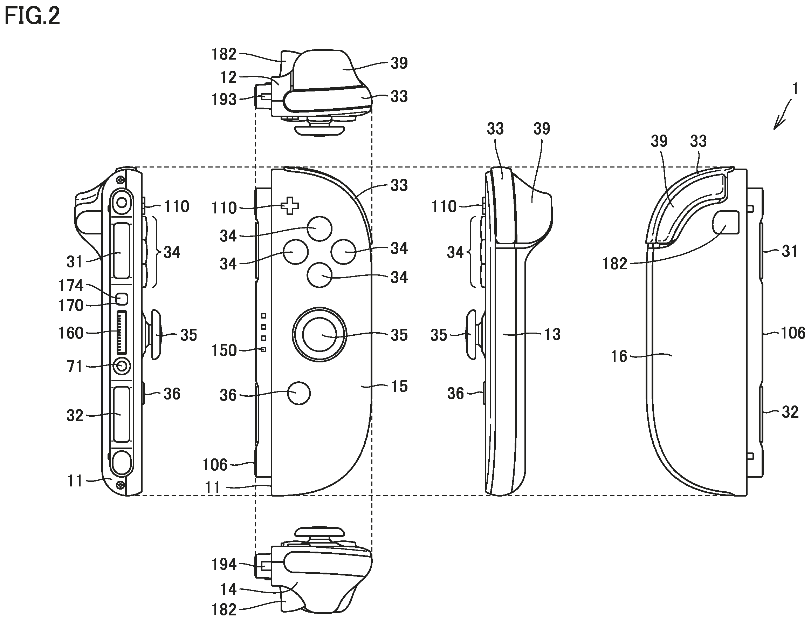

Fig. 2 is a schematic six-view drawing showing a configuration of a first input device 1. As shown in Fig. 2, first input device 1 in the present embodiment includes a first button 31, a second button 32, a third operation part 33, a fourth operation part 34, a fifth operation part 35, a sixth operation part 36, a ninth operation part 39, and a first synchronization button 71. These are exemplary operation parts and first input device 1 does not have to include all of them. First input device 1 may include another operation part such as a touch pad or a pressure sensor instead of or in addition to these operation parts.

While first input device 1 is attached to game device 300, input information from the operation part is transmitted to first plug connector 330 of game device 300 through a first terminal 160 which will be described later and processed in accordance with a program by a CPU of game device 300. In a manner of use where the input device is not attached to game device 300, input information from the operation part is transmitted to the CPU of game device 300 through a wireless chip included in the input device and a wireless chip included in game device 300. An information processing apparatus 1000 does not have to include first terminal 160 and first plug connector 330, and in that case, information is transmitted through the wireless chips also while the input device is attached to game device 300.

As shown in Fig. 2, first input device 1 includes a front surface 15, a rear surface 16, a first side surface 11, an upper surface 12, a second side surface 13, and a lower surface 14. Front surface 15 is a surface opposed to a user who uses first input device 1 in an integrally held state, a horizontally held state, and a vertically held state which will be described later. Rear surface 16 is located opposite to front surface 15. Front surface 15 and rear surface 16 are each contiguous to first side surface 11, upper surface 12, second side surface 13, and lower surface 14.

A direction of normal to first side surface 11 is also referred to as a first direction R1. First direction R1 is a direction in which a projection 100 projects and also referred to as a left side or a projection direction or a left direction. A direction opposite to first direction R1 is also referred to as a third direction R3. Third direction R3 is also referred to as a right side or a right direction. First direction R1 and third direction R3 are also collectively referred to as the left-right direction.

A direction toward upper surface 12 which is perpendicular to the left-right direction is also referred to as a second direction R2. Second direction R2 is also referred to as an upper side or an upward direction. A direction opposite to second direction R2 is also referred to as a fourth direction R4. Fourth direction R4 is also referred to as a lower side or a downward direction. Second direction R2 and fourth direction R4 are also collectively referred to as the upward-downward direction.

A direction normal to front surface 15 is also referred to as a fifth direction R5. Fifth direction R5 is also referred to as a front surface side or a front direction. A direction opposite to the fifth direction is also referred to as a sixth direction R6. Sixth direction R6 is also referred to as a rear surface side or a rear direction. Fifth direction R5 and sixth direction R6 are also collectively referred to as the front-rear direction.

In the present embodiment, the longitudinal direction of front surface 15 is the upward-downward direction of front surface 15. Front surface 15 is generally in a rectangular shape. An upper right corner and a lower right corner of front surface 15 is curved more than an upper left corner and a lower left corner.

As described above, first side surface 11 is located at a side of the left direction with respect to the front surface. First side surface 11 is a side surface that extends in the longitudinal direction of front surface 15. First side surface 11 extends in the upward-downward direction. Second side surface 13 is located opposite to first side surface 11. Second side surface 13 is located at a side of third direction R3 of first side surface 11. Upper surface 12 is a side surface that is contiguous to an upper end of first side surface 11 and extends in a direction away from first side surface 11. An end of upper surface 12 distant from first side surface 11 is contiguous to an upper end of second side surface 13. Lower surface 14 is a side surface that is contiguous to a lower end of first side surface 11 and extends in a direction away from first side surface 11. An end of lower surface 14 distant from first side surface 11 is contiguous to a lower end of second side surface 13. Upper surface 12 is located at a side of second direction R2, of lower surface 14.

As shown in Fig. 2, upper surface 12 is provided with third operation part 33 and ninth operation part 39. Front surface 15 is provided with a + button 110, a set of fourth operation parts 34, fifth operation part 35, sixth operation part 36, and a seventh operation part 37.

In the upward-downward direction, first button 31 and second button 32 are located as being aligned. First button 31 is located above second button 32. A top surface of each of first button 31 and second button 32 extends along the upward-downward direction.

First button 31 and second button 32 are each a button on which the user performs a pressing-down operation and they are each a component that moves in the right direction as a result of the pressing-down operation. As first button 31 moves in the right direction by the pressing-down operation by the user, a switch located inside first input device 1 is pressed by first button 31.

Third operation part 33 is, for example, a button that is to be used in the integrally held state and located in an upper right portion of first input device 1 in the integrally held state. Third operation part 33 may be used also in the vertically held state. Third operation part 33 includes a curved operation surface. Third operation part 33 extends in the direction away from first side surface 11. Third operation part 33 is generally located at a lower right portion of first input device 1 in the horizontally held state. At least a part of third operation part 33 may be located at upper surface 12. The operation surface of third operation part 33 is generally curved along the upper right portion of first input device 1.

Ninth operation part 39 is, for example, a button to be used in the integrally held state. Ninth operation part 39 may be used in the vertically held state. Ninth operation part 39 is located behind third operation part 33. Ninth operation part 39 is provided with a curved operation surface. Ninth operation part 39 is generally located at the lower right portion of first input device 1 in the horizontally held state.

The set of fourth operation parts 34 includes four buttons arranged, for example, in a cross shape. Among the four buttons, two buttons are located as being aligned along the upward-downward direction. Among the four buttons, other two buttons are located as being aligned along the left-right direction.

In the upward-downward direction, first button 31 and the set of fourth operation parts 34 are located at positions where they are at least partially superposed on each other. In the upward-downward direction, a part of each of the button located at an upper side and the button located at a lower side of the set of fourth operation parts 34 is located at a position where it is superimposed on first button 31, and two buttons as a whole located at an intermediate portion are located at positions where they are superimposed on first button 31.

Fifth operation part 35 is an operation part for input of a direction. Fifth operation part 35 is tiltable in directions around 360 degrees and may be tiltable in any direction including first direction R1 to fourth direction R4. Fifth operation part 35 may be tiltable only in at least one direction. Fifth operation part 35 may be pushed in. Fifth operation part 35 may be slidable in each direction, instead of being tilted. Sixth operation part 36 is, for example, an operation part for opening an operation menu. Sixth operation part 36 is a button that can be pushed in.

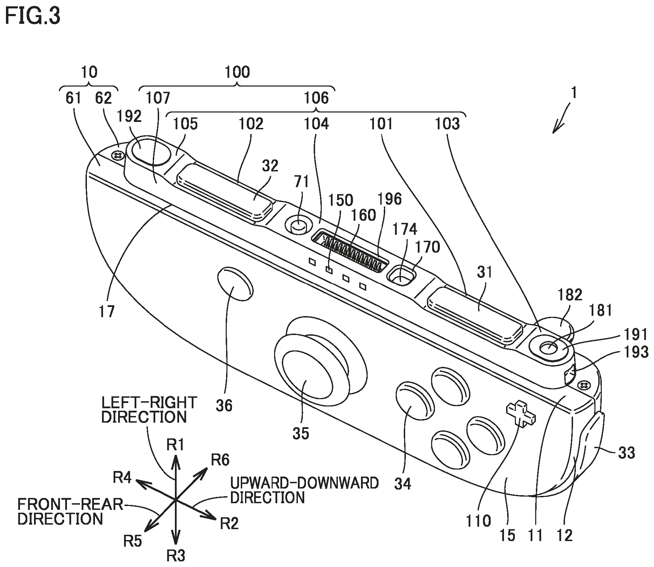

Fig. 3 is a schematic perspective view showing the configuration of first input device 1.

As shown in Fig. 3, first input device 1 includes, in addition to already-described features, a mouse operation sensor 174, a light emission portion 150 that gives a notification of an identification number of the input device, first terminal 160 configured to be connected to game device 300, a terminal opening 196, a first mouse skate member 191, a second mouse skate member 192, and a pusher 181 and a pusher operation portion 182 that implement a removal mechanism for removal of projection 100 from game device 300.

As shown in Fig. 3, projection 100 projects from first side surface 11 to the left. From another point of view, projection 100 projects in first direction R1 from first side surface 11. Projection 100 is a projection in an elongated shape that extends along the longitudinal direction of first side surface 11. A projection 200 of a second input device 2 is also similar in configuration to projection 100. The configuration of projection 100 of first input device 1 will mainly be described below.

Projection 100 includes a top surface 106 and an outer peripheral surface 107. Outer peripheral surface 107 is located between top surface 106 and first side surface 11 and extends from top surface 106 to first side surface 11. Outer peripheral surface 107 is contiguous to top surface 106 as surrounding an outer edge of top surface 106. Top surface 106 extends along the longitudinal direction of first side surface 11. A length in the upward-downward direction of top surface 106 is longer than a length in the front-rear direction of top surface 106. First button 31 and second button 32 are located at top surface 106 of projection 100. First button 31 and second button 32 are members configured to be attracted to a magnet.

In the present example, projection 100 is in a shape of a frustum of a pyramid decreasing in cross-section toward top surface 106. An end area in the longitudinal direction may be rounded. From another point of view, when projection 100 is viewed from a side of top surface 106, top surface 106 and outer peripheral surface 107 that surrounds top surface 106 are seen. The shape of projection 100 is not limited to the shape of the frustum of the pyramid. By way of example, projection 100 may be in a shape of a frustum of a cone or a parallelepiped. Outer peripheral surface 107 of projection 100 may be in a shape that does not flare outward toward top surface 106. In other words, outer peripheral surface 107 of projection 100 may be inclined inward toward top surface 106, or may not be inclined inward and outward, or may extend, for example, perpendicularly from first side surface 11.

A length in the upward-downward direction of projection 100 (that is, the length in the longitudinal direction of projection 100) may be, for example, at least two times or at least five times as long as the length in the front-rear direction of projection 100. The length in the left-right direction of projection 100 may be, for example, at least fifty percent or at least seventy percent as long as the length in the left-right direction of first side surface 11. The length in the upward-downward direction of projection 100 may be, for example, at most twenty-five times or at most fifteen times as long as the length in the front-rear direction of projection 100.

Increase in length in the upward-downward direction the of projection 100 can lead to increase in length in the upward-downward direction of top surfaces (operation surfaces) of first button 31 and second button 32 and better operability, for example, in the horizontally held state. Arrangement of first mouse skate member 191, second mouse skate member 192, and the like at top surface 106 of projection 100 can also be facilitated.

As shown in Fig. 3, projection 100 lies between afront-surface-side housing 61 and a rear-surface-side housing 62 that form a controller housing 10. First side surface 11 is provided with a housing opening 17 defined by an end surface of front-surface-side housing 61 and an end surface of rear-surface-side housing 62. Projection 100 projects through housing opening 17 from the inside of controller housing 10.

As shown in Figs. 2 and 3, outer peripheral surface 107 of projection 100 includes a first engagement hole 193 and a second engagement hole 194. First engagement hole 193 is located at one longitudinal end surface of projection 100. Second engagement hole 194 is located at the other longitudinal end surface of projection 100. First engagement hole 193 is different in shape from second engagement hole 194. In the front-rear direction, first engagement hole 193 may be different in length from second engagement hole 194. In the left-right direction, first engagement hole 193 may be different in length from second engagement hole 194.

Mouse operation sensor 174 is located at projection 100. Specifically, mouse operation sensor 174 is located inside a first opening 170 located at top surface 106 of projection 100. First opening 170 is located between first button 31 and second button 32 in the longitudinal direction of projection 100. More specifically, first opening 170 is located between first button 31 and terminal opening 196 which will be described later in the longitudinal direction of projection 100. Mouse operation sensor 174 is located inside projection 100. Mouse operation sensor 174 is, for example, an optical sensor. Mouse operation sensor 174 includes, for example, a light source (not shown) and a light reception sensor (not shown). Input device 1 may include in first opening 170, a lens 520 configured to condense light emitted from the light source or light guided to the light reception sensor.

The light source of mouse operation sensor 174 emits light. Light may be, for example, red light, blue light, or laser beams. A wavelength of light is not particularly limited. Light from the light source irradiates a tracking surface F through first opening 170. The light reception sensor detects reflection by tracking surface F, of light radiated from the light source, reflected light being varied with movement of input device 1 relative to tracking surface F and introduced through first opening 170. Second input device 2 which will be described later is also similarly configured.

Terminal opening 196 is located between first button 31 and second button 32, at top surface 106. First terminal 160 is located between first button 31 and second button 32 in the longitudinal direction of projection 100. First terminal 160 is located in projection 100.

First synchronization button 71 is located at projection 100. First synchronization button 71 is pressed by the user. First synchronization button 71 is located between first button 31 and second button 32 in the longitudinal direction of projection 100. More specifically, first synchronization button 71 is located between terminal opening 196 and second button 32 in the longitudinal direction of projection 100. First synchronization button 71 may be used for an instruction for setting processing relating to wireless communication between first input device 1 and game device 300.

Light emission portion 150 is located at outer peripheral surface 107 of projection 100. More specifically, light emission portion 150 is located at the front surface side of outer peripheral surface 107. From another point of view, an area of outer peripheral surface 107 where light emission portion 150 is located faces the front surface side. When the user views front surface 15 of first input device 1, the user can visually recognize light from light emission portion 150. Light emission portion 150 typically allows emission of light emitted by an LED to the outside.

Light emission portion 150 can notify the user of prescribed information. Light emission portion 150 may show to the user, information for identification of each input device when game device 300 communicates with a plurality of input devices. Light emission portion 150 may show another type of information to the user. The number of light emission portions 150 is not particularly limited, and for example, four light emission portions 150 are provided. In the present embodiment, four light emission portions 150 are arranged as being aligned in the upward-downward direction. For example, among four light emission portions 150, light emission portion 150 in a portion corresponding to an identification number provided to the input device may be turned on, or light emission portion(s) 150 in number corresponding to the identification number may be turned on.

Light emission portion 150 is located between first button 31 and second button 32 in the longitudinal direction of projection 100. Light emission portion 150 is located at a position superimposed on terminal opening 196 in the longitudinal direction of projection 100.

On top surface 106 of projection 100, first mouse skate member 191 and second mouse skate member 192 are placed. A height of each of first mouse skate member 191 and second mouse skate member 192 from top surface 106 is higher than a height of top surface 106 of projection 100 from first side surface 11. From another point of view, first mouse skate member 191 and second mouse skate member 192 raise the height of the top surface of projection 100. In the present embodiment, the top surface of first mouse skate member 191 and the top surface of second mouse skate member 192 define a part of first side surface 11. First mouse skate member 191 and second mouse skate member 192 do not have to be provided.

Input device 1 may be placed in such a manner that the top surface of projection 100 is opposed to a grounding surface such as a desktop. At this time, first mouse skate member 191 and second mouse skate member 192 themselves come in contact with the grounding surface to suppress direct contact with the grounding surface, of a portion of top surface 106 of projection 100 where the mouse skate is not located. The top surfaces of first mouse skate member 191 and second mouse skate member 192 come in contact with the game-device-side bottom surface of game device recess 310 when first input device 1 is attached to game device 300.

The height of the top surfaces of first mouse skate member 191 and second mouse skate member 192 is equal to or higher than a highest height of top surface 106 of projection 100. From another point of view, the top surfaces of first mouse skate member 191 and second mouse skate member 192 are located at a leftmost position in first input device 1. First mouse skate member 191 is not particularly limited in shape, and it may be in any, for example, of a circular shape, an elliptical shape, or a rectangular shape. First mouse skate member 191 may be provided with a through hole. First mouse skate member 191 and second mouse skate member 192 may be the same or different in shape.

In the upward-downward direction (in other words, the longitudinal direction of projection 100), first mouse skate member 191 is located above first button 31. In the upward-downward direction, first button 31 is located between terminal opening 196 and first mouse skate member 191.

In the upward-downward direction, second mouse skate member 192 is located below second button 32. In the upward-downward direction, second button 32 is located between terminal opening 196 and second mouse skate member 192. More specifically, in the upward-downward direction, second button 32 is located between first synchronization button 71 and second mouse skate member 192.

As shown in Fig. 3, top surface 106 of projection 100 includes areas different in height from first side surface 11. Top surface 106 of projection 100 includes a first area 101, a second area 102, a third area 103, a fourth area 104, and a fifth area 105.

In first area 101, first button 31 is located. In second area 102, second button 32 is located. In third area 103, first mouse skate member 191 is located. In fourth area 104, terminal opening 196 is located. In fifth area 105, second mouse skate member 192 is located.

In the longitudinal direction of projection 100, fourth area 104 is located between first area 101 and second area 102. In the longitudinal direction of projection 100, first area 101 is located between third area 103 and fourth area 104. In the longitudinal direction of projection 100, second area 102 is located between fifth area 105 and fourth area 104. In the longitudinal direction of projection 100, each of first area 101, second area 102, and fourth area 104 is located between third area 103 and fifth area 105.

Fourth area 104 is located at a side of first direction R1 relative to each of first area 101 and second area 102. Third area 103 is located at the side of first direction R1 relative to fourth area 104. Fifth area 105 is located at the side of first direction R1 relative to fourth area 104.

### <Second Input Device>

The configuration of first input device 1 is mainly described so far. Second input device 2 is also similar in basic configuration to first input device 1. Only overview of second input device 2 will be described below.

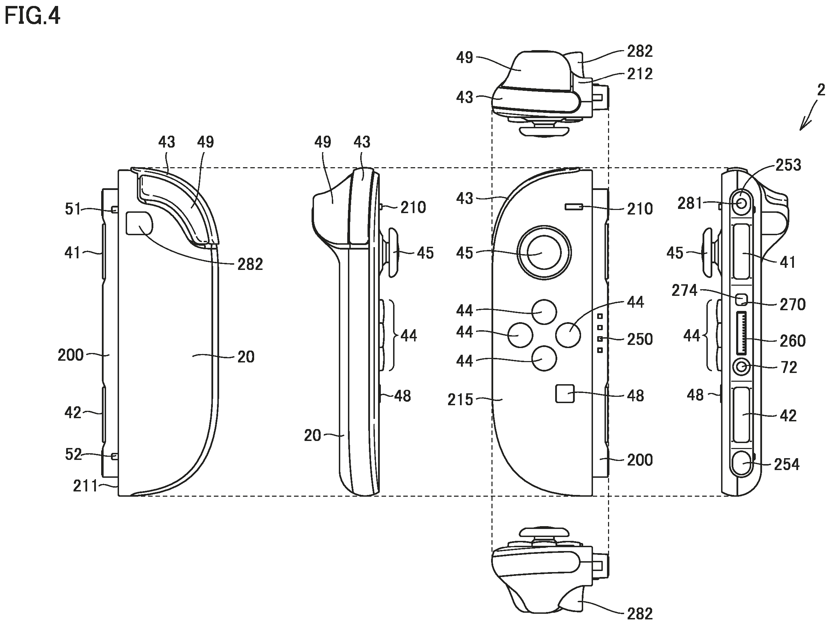

Fig. 4 is a schematic six-view drawing showing a configuration of second input device 2. As shown in Fig. 4, second input device 2 includes a first button 41, a second button 42, a third operation part 43, a fourth operation part 44, a fifth operation part 45, an eighth operation part 48, a - button 210, and a second synchronization button 72.

As shown in Fig. 4, at the top surface of projection 200 of second input device 2, first button 41 and second button 42 are located along the longitudinal direction. First button 41 and second button 42 are members configured to be attracted to a magnet. At an upper surface 212, third operation part 43 and a ninth operation part 49 are located. At a front surface 215, - button 210, a set of fourth operation parts 44, fifth operation part 45, and eighth operation part 48 are located.

In the upward-downward direction, first button 41 and second button 42 are located as being aligned. First button 41 is located above second button 42. In the upward-downward direction, first button 41 and fifth operation part 45 are located at positions where they are at least partially superposed on each other. In the upward-downward direction, second button 42 and eighth operation part 48 are located at positions where they are at least partially superposed on each other.

In the upward-downward direction, - button 210, the set of fourth operation parts 44, fifth operation part 45, and eighth operation part 48 are located as being aligned. Fifth operation part 45 is located below - button 210. The set of fourth operation parts 44 is located below fifth operation part 45. Eighth operation part 48 is located below the set of fourth operation parts 44.

Second input device 2 includes a light emission portion 250, a second terminal 260 connected to game device 300, a mouse operation sensor 274, a first opening 270 that guides light to mouse operation sensor 274, a third mouse skate member 253, a fourth mouse skate member 254, a pusher 281 for removal of projection 200 from game device 300, and a pusher operation portion 282 configured to operate pusher 281. A structure or a function of each feature is substantially the same as that of first input device 1. At least one of functions may be different.

As shown in Fig. 4, second input device 2 includes a first projecting body 51 and a second projecting body 52. Each of first projecting body 51 and second projecting body 52 is located at a rear surface side of the outer peripheral surface of projection 200. In the upward-downward direction, first projecting body 51 is located above second projecting body 52. When viewed in the front-rear direction, each of first projecting body 51 and second projecting body 52 is, for example, in a quadrangular shape. Each of first projecting body 51 and second projecting body 52 may be integrated with or separate from a housing that defines projection 200. When projection 200 is matched with the recess, first projecting body 51 and second projecting body 52 interfere with an inner peripheral surface of the recess. As first projecting body 51 and second projecting body 52 or the entire projection 200 deform(s), projection 200 is matched with the recess. Wobbling of projection 200 and the recess is thus suppressed. First input device 1 also includes a similar projecting body at the rear surface side of the outer peripheral surface of projection 100.

In the horizontally held state, positional relation between the set of fourth operation parts 34 and fifth operation part 35 in first input device 1 is the same as positional relation between the set of fourth operation parts 44 and fifth operation part 45 in second input device 2. In other words, in first input device 1, fifth operation part 35 is located at the left of the set of fourth operation parts 34. Similarly, in second input device 2, fifth operation part 45 is located at the left of the set of fourth operation parts 44. In the horizontally held state, on the other hand, third operation part 33 and ninth operation part 39 are located at the right side in first input device 1, whereas third operation part 43 and ninth operation part 49 are located at the left side in second input device 2. From another point of view, in the integrally held state, fifth operation part 35 in first input device 1 is located under the set of fourth operation parts 34, whereas fifth operation part 45 in second input device 2 is located above the set of fourth operation parts 44. In the integrally held state, on the other hand, third operation part 33 and ninth operation part 39 of first input device 1 and third operation part 43 and ninth operation part 49 of second input device 2 are both located above.

### <Method of Operating Input Device as Mouse>

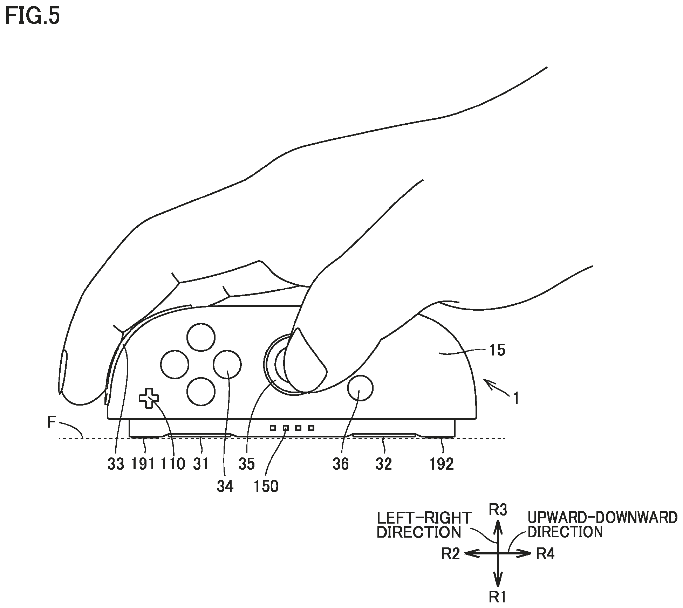

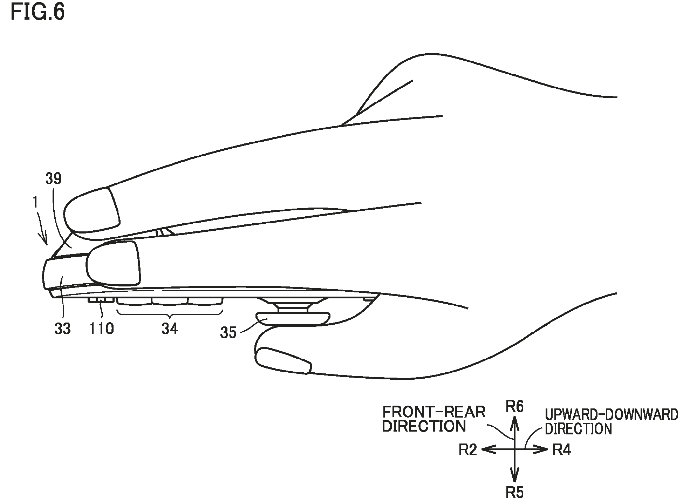

Fig. 5 is a schematic front view showing a state of use of first input device 1 as a mouse. Fig. 6 is a schematic right side view showing the state of use of first input device 1 as the mouse.

As shown in Figs. 5 and 6, first input device 1 according to the present embodiment can be used also as a mouse by being placed on tracking surface F while the first opening where mouse operation sensor 174 is located is opposed to tracking surface F. As described above, the input device is provided with mouse operation sensor 174.

As shown in Figs. 5 and 6, when input device 1 according to the present embodiment is used as the mouse, the user's palm is arranged to cover second side surface 13 of first input device 1. The right thumb of the user is arranged at the side of front surface 15. For example, the right thumb of the user is put along fifth operation part 35. The right forefinger of the user is arranged on third operation part 33. The right middle finger of the user is arranged on ninth operation part 39.

Second input device 2 may also similarly be used as the mouse with the left hand. First input device 1 may be operated with the right hand and second input device 2 may be operated with the left hand. The user may use one of first input device 1 and second input device 2 as the mouse and may use the other as the vertically held input device. Second input device 2 may be operated with the right hand and first input device 1 may be operated with the left hand.

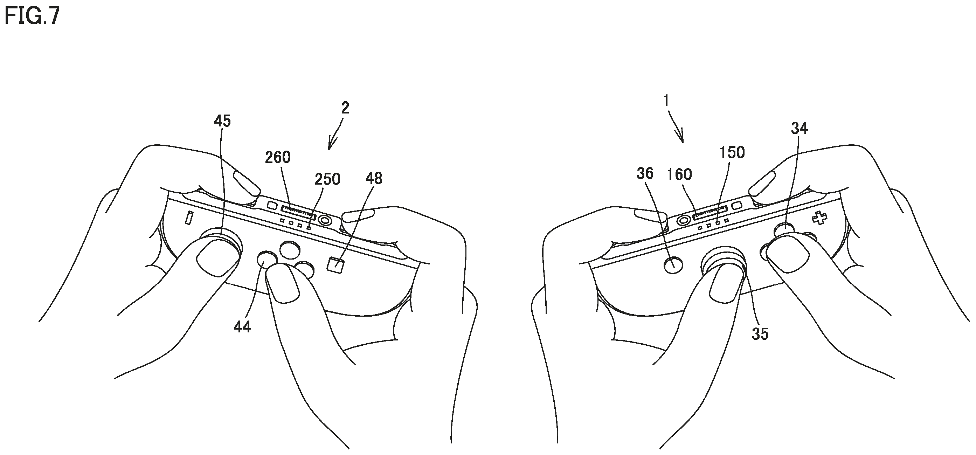

Fig. 7 is a diagram showing an exemplary state in which the input device is operated as being horizontally held.

As shown in Fig. 7, while the input device is not attached to game device 300, it is used with the longitudinal direction thereof extends in the left-right direction (from another point of view, a direction in parallel to the ground). In the example shown in Fig. 7, different users operate first input device 1 and second input device 2, respectively. The state of use shown in Fig. 7 is also called the horizontally held state.

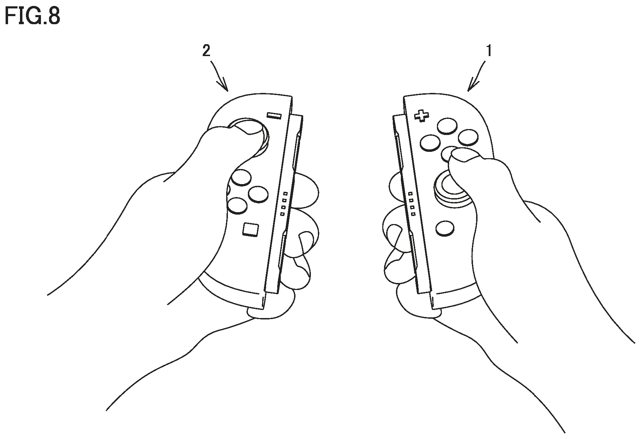

Fig. 8 is a diagram showing an exemplary state in which the input device is operated as being vertically held.

As shown in Fig. 8, while the input device is not attached to game device 300, it is also used with the longitudinal direction thereof extends in the upward-downward direction (from another point of view, a direction perpendicular to the ground). In the example shown in Fig. 8, a single user operates both of first input device 1 and second input device 2. Different users may operate respective input devices. The state of use shown in Fig. 8 is also called the vertically held state.

### <Information Processing Apparatus>

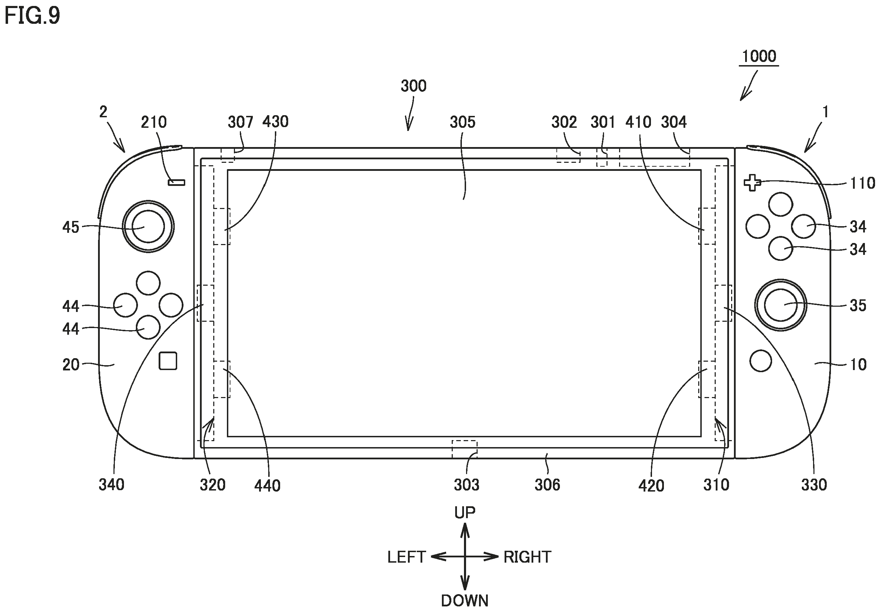

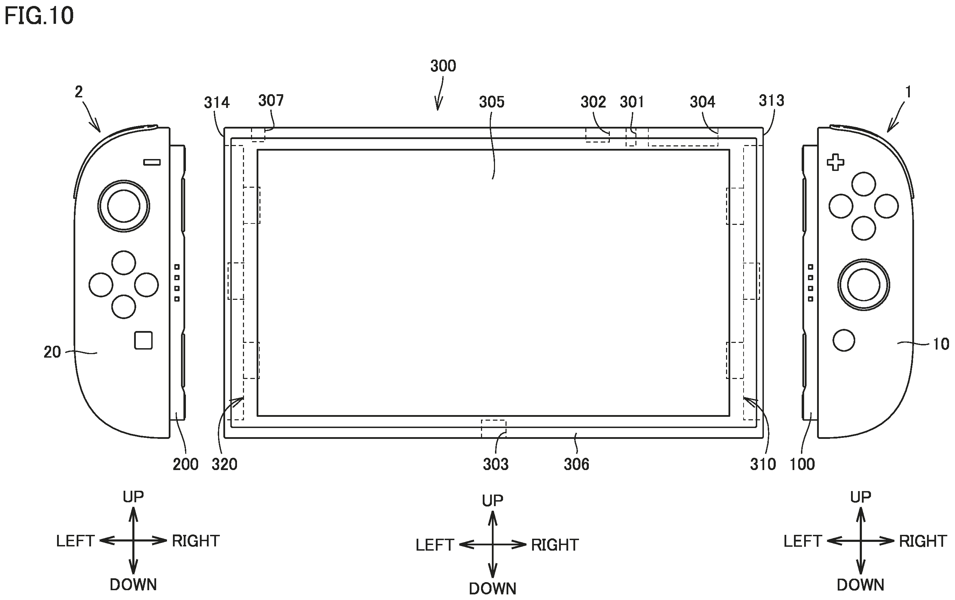

An exemplary configuration of information processing apparatus 1000 will now be described. Fig. 9 is a schematic front view showing a configuration of an exemplary information processing apparatus. Fig. 10 is a schematic front view showing a state in which each of first input device 1 and second input device 2 has been removed from game device 300.

As shown in Figs. 9 and 10, information processing apparatus 1000 includes first input device 1, second input device 2, and game device 300. First input device 1 or second input device 2 is also simply collectively referred to as the input device. Game device 300 is configured to perform game processing. The game processing is performed based on an input to the input device. Game device 300 is a console. First input device 1 and second input device 2 are attachable to and removable from game device 300.

First input device 1 is attached to game device 300 such that projection 100 is matched with game device recess 310. First input device 1 is attached to game device 300 such that the top surface of projection 100 of first input device 1 is opposed to main body right side surface 313 of game device 300 and the longitudinal direction of the top surface of projection 100 of first input device 1 extends along the longitudinal direction of main body right side surface 313 of game device 300. Similarly, second input device 2 is attached to game device 300 such that projection 200 is matched with game device recess 320. Second input device 2 is attached to game device 300 such that the top surface of projection 200 of second input device 2 is opposed to main body left side surface 314 of game device 300 and the longitudinal direction of the top surface of projection 200 of second input device 2 extends along the longitudinal direction of main body left side surface 314 of game device 300.

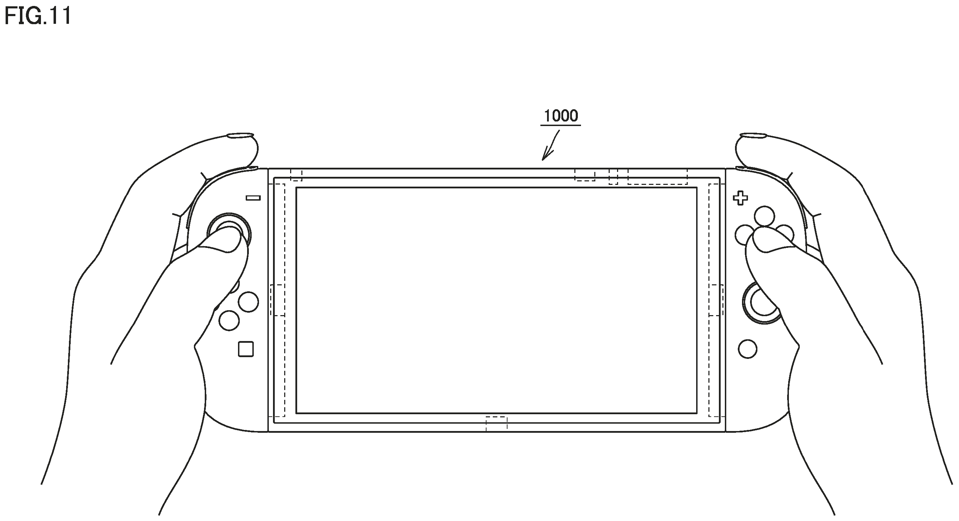

Fig. 11 is a diagram showing an exemplary state in which the information processing apparatus is operated as being held. The state of use shown in Fig. 11 is also called the integrally held state.

As shown in Fig. 11, while the input device is attached to game device 300, it is used such that the longitudinal direction thereof extends, for example, along the upward-downward direction. The input device can be used in each of a state in which it is attached to game device 300 and a state in which it is not attached to game device 300. First input device 1 and second input device 2 are configured to communicate with game device 300.

### <Peripheral Device>

### (First Embodiment)

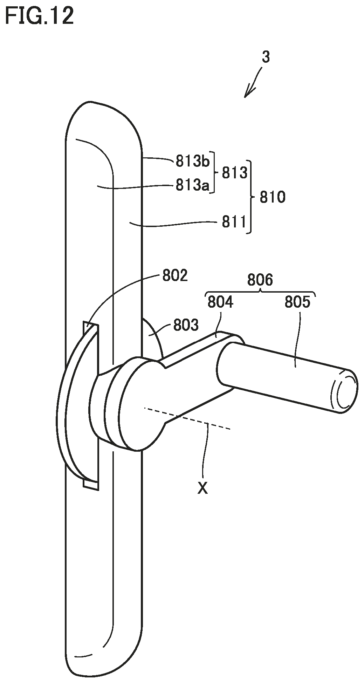

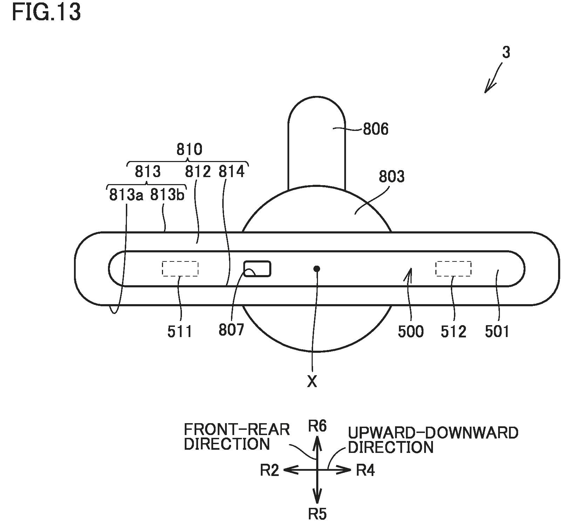

A configuration of a peripheral device according to a first embodiment will now be described. Fig. 12 is a schematic perspective view showing the configuration of the peripheral device according to the first embodiment. Fig. 13 is a schematic bottom view showing the configuration of the peripheral device according to the first embodiment.

As shown in Figs. 12 and 13, a peripheral device 3 includes a main body portion 810, a tracking part 803, and an operation part 806. Main body portion 810 includes a main body portion top surface 811, a main body portion bottom surface 812, and a main body portion outer peripheral surface 813. Main body portion bottom surface 812 is located opposite to main body portion top surface 811. Main body portion outer peripheral surface 813 is contiguous to each of main body portion top surface 811 and main body portion bottom surface 812.

Peripheral device 3 is provided with a recess 500. Projection 100 or 200 of the input device is attachably and removably matched with recess 500. Recess 500 is located at main body portion 810. Recess 500 opens at main body portion bottom surface 812. Recess 500 extends along the longitudinal direction of projection 100 or 200. The longitudinal direction of recess 500 corresponds to the upward-downward direction. A direction of a short side of recess 500 corresponds to the front-rear direction. In the present example, recess 500 opens in one of the left direction and the right direction and does not open in the upward-downward direction and the front-rear direction.

Main body portion 810 is provided with a tracking part arrangement hole 802. Tracking part arrangement hole 802 passes through main body portion 810. Main body portion outer peripheral surface 813 includes a first outer peripheral surface portion 813a and a second outer peripheral surface portion 813b. Second outer peripheral surface portion 813b is located opposite to first outer peripheral surface portion 813a. Each of first outer peripheral surface portion 813a and second outer peripheral surface portion 813b extends along the longitudinal direction of recess 500 and faces outward. Tracking part arrangement hole 802 opens at each of first outer peripheral surface portion 813a and second outer peripheral surface portion 813b.

Tracking part 803 is, for example, in a shape of a disc. Operation part 806 causes motion of tracking part 803 by being operated by the user. Tracking part 803 rotates in accordance with an operation on operation part 806. Tracking part 803 is rotatable around a rotation axis X. Rotation axis X extends, for example, along a depth direction of recess 500. Main body portion 810 is provided with a main body portion inner peripheral surface 814. When viewed along rotation axis X, main body portion inner peripheral surface 814 is surrounded by main body portion outer peripheral surface 813. Recess 500 is defined, for example, by main body portion inner peripheral surface 814 and a recess bottom surface 501. Rotation axis X extends to intersect recess bottom surface 501. Main body portion inner peripheral surface 814 may generally be in a shape of an outer peripheral surface of a frustum of a pyramid, with recess bottom surface 501 being defined as an upper base side. In other words, main body portion inner peripheral surface 814 may be in a shape flaring from recess bottom surface 501 toward the upper end. The shape of recess 500 is not limited to the shape of the outer peripheral surface of the frustum of the pyramid. By way of example, recess 500 may be in a shape of an outer peripheral surface of a frustum of a cone or a shape of an outer peripheral surface of a parallelepiped. Main body portion inner peripheral surface 814 may be in a shape not flaring outward, from recess 500 toward the upper end. In other words, main body portion inner peripheral surface 814 may be inclined outward toward the upper end, or does not have to be inclined inward and outward. From another point of view, when recess 500 is viewed from a side of the opening, at least the entire recess bottom surface 501 may be seen.

Operation part 806 includes, for example, a handle 805 and a connection member 804. Handle 805 is a portion to be gripped by the user. Handle 805 extends, for example, in a direction in parallel to rotation axis X of tracking part 803. Handle 805 is distant from rotation axis X of tracking part 803 in a radial direction. Connection member 804 connects tracking part 803 and handle 805 to each other. Connection member 804 extends in a direction orthogonal to rotation axis X. By turning handle 805, connection member 804 to which handle 805 is attached rotates and tracking part 803 attached to connection member 804 also turns.

At least a part of tracking part 803 is located inside peripheral device 3. Specifically, at least a part of tracking part 803 is located inside tracking part arrangement hole 802. A part of tracking part 803 may be located outside tracking part arrangement hole 802. An outer peripheral portion of tracking part 803 repeatedly comes in and out of tracking part arrangement hole 802 while tracking part 803 rotates. A central portion of tracking part 803, on the other hand, remains located inside tracking part arrangement hole 802 while tracking part 803 is rotating.

Peripheral device 3 includes a first magnet 511 and a second magnet 512. First magnet 511 and second magnet 512 are members to be attracted to first button 41 and second button 42, respectively. First magnet 511 and second magnet 512 may be members configured to be attracted to second button 42 and first button 41, respectively. Each of first magnet 511 and second magnet 512 is located at the bottom of recess 500. Each of first magnet 511 and second magnet 512 is buried inside main body portion 810. Each of first magnet 511 and second magnet 512 may be exposed from main body portion 810. Peripheral device 3 is provided with a second opening 807. Second opening 807 is located at the bottom of recess 500. As shown in Fig. 13, when viewed in the depth direction of recess 500, second opening 807 is located between first magnet 511 and second magnet 512. When viewed in the depth direction of recess 500, second opening 807 is located between first magnet 511 and rotation axis X.

### <System>

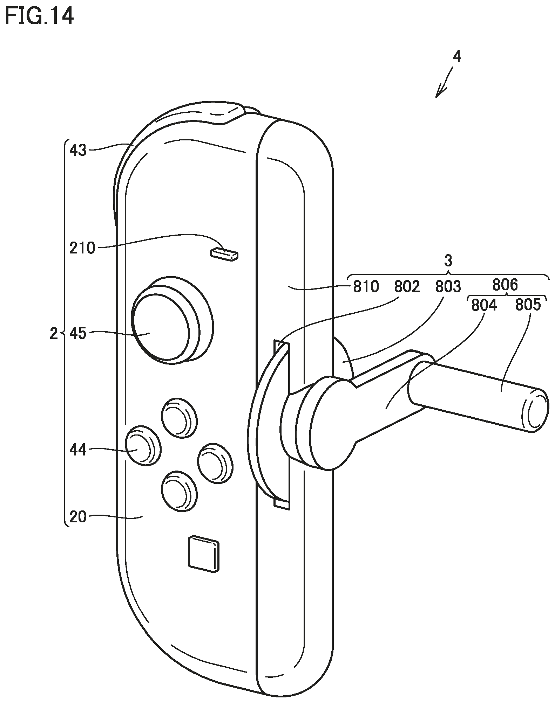

Fig. 14 is a schematic perspective view showing a configuration of a system according to the first embodiment. As shown in Fig. 14, a system 4 includes peripheral device 3 and input device 2. Input device 2 is attached to peripheral device 3. Input device 2 is removably attached to peripheral device 3. Projection 200 of input device 2 is inserted in recess 500 of peripheral device 3. For example, in attachment of input device 2 to peripheral device 3, first button 41 and second button 42 are attracted to first magnet 511 and second magnet 512, respectively. Input device 1 may be attached to peripheral device 3.

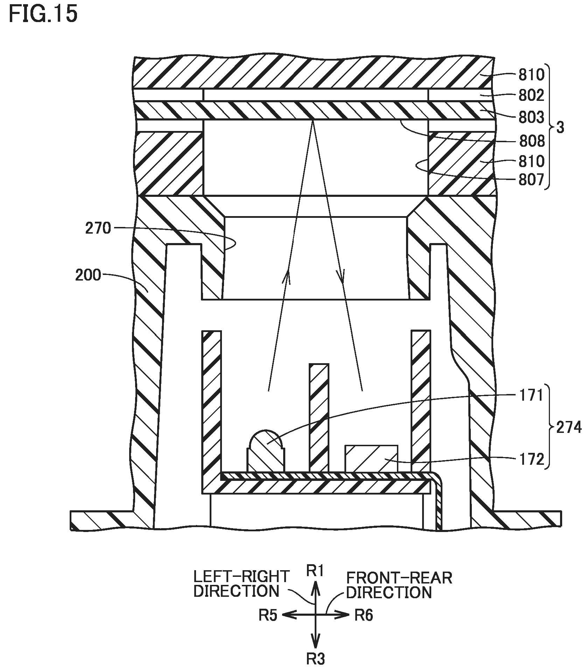

Fig. 15 is a schematic cross-sectional view showing a configuration in which the input device is attached to the peripheral device according to the first embodiment. The cross-section shown in Fig. 15 is in parallel to each of the depth direction of recess 500 and the direction of the short side of recess 500.

Second opening 807 of peripheral device 3 is opposed to first opening 270 of projection 200. Tracking part 803 is provided with a tracking surface 808. Tracking surface 808 is opposed to the top surface of projection 200. Tracking surface 808 is a surface of tracking part 803 that intersects rotation axis X and faces second opening 807. Tracking surface 808 is orthogonal to rotation axis X. Tracking surface 808 may be inclined with respect to a plane perpendicular to rotation axis X. Tracking surface 808 may be a plane, a curved surface, or a surface with asperities.

As shown in Fig. 15, mouse operation sensor 274 includes, for example, a light source 171 and a light reception sensor 172. Light source 171 emits light. Light may be, for example, red light, blue light, or laser beams. A wavelength of light is not particularly limited. Light from light source 171 passes through first opening 270 and enters second opening 807. Light from light source 171 irradiates tracking part 803 through second opening 807. Tracking surface 808 of tracking part 803 is configured to reflect incident light from second opening 807j. Light reception sensor 172 detects reflected light from tracking part 803.

Motion of tracking part 803 is detected by mouse operation sensor 274. Mouse operation sensor 274 detects movement with respect to tracking surface 808. Specifically, mouse operation sensor 274 detects movement of tracking surface 808 relative to mouse operation sensor 274. In the present embodiment, mouse operation sensor 274 remains at rest and tracking part 803 moves. Movement of tracking surface 808 relative to mouse operation sensor 274 is detected through first opening 270 and second opening 807.

At least a part of tracking part 803 may be located inside peripheral device 3 and detected by mouse operation sensor 274 through second opening 807. From another point of view, a part of tracking surface 808 of tracking part 803 may be opposed to second opening 807 and the remainder of tracking surface 808 of tracking part 803 does not have to be opposed to second opening 807.

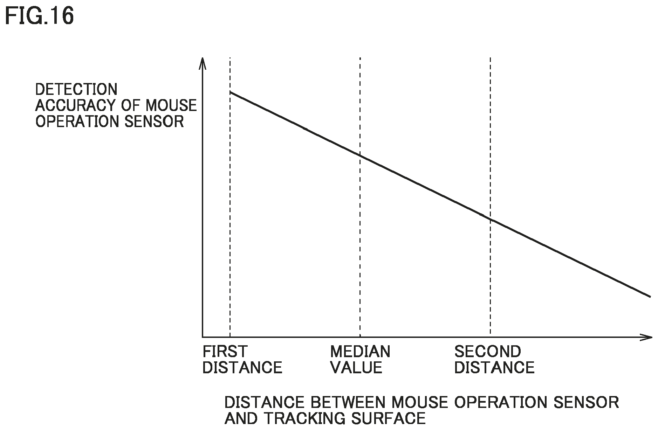

Fig. 16 is a schematic diagram showing relation between detection accuracy of mouse operation sensor 274 and a distance between mouse operation sensor 274 and the tracking surface. The ordinate in Fig. 16 represents detection accuracy of mouse operation sensor 274 and the abscissa in Fig. 16 represents a distance between mouse operation sensor 274 and the tracking surface.

Mouse operation sensor 274 can output a highly accurate signal about movement relative to the tracking surface when the distance between mouse operation sensor 274 and the tracking surface is within a range from a first distance to a second distance. The second distance is longer than the first distance. Detection accuracy of mouse operation sensor 274 becomes lower with increase in distance between mouse operation sensor 274 and the tracking surface from the first distance to the second distance. Though detection accuracy linearly lowers in Fig. 16, it may non-linearly lower. Detection accuracy in an example where the distance is shorter than the first distance may be lower than detection accuracy in an example where the distance is the first distance. The distance between mouse operation sensor 274 and the tracking surface refers, for example, to a distance between an end surface of light reception sensor 172 of mouse operation sensor 274 and the tracking surface.

Mouse operation sensor 274 is located at input device 2 such that a separation distance (a first separation distance) between mouse operation sensor 274 and the tracking surface when input device 2 is placed on a desk with first opening 270 being opposed to the tracking surface is intermediate between a median value of the first distance and the second distance and the first distance. Mouse operation sensor 274 can thus output an accurate signal about movement with respect to the tracking surface such as the desktop. Furthermore, for example, in an example where the separation distance (a second separation distance) between mouse operation sensor 274 and the tracking surface is longer than the first separation distance due to a position of mount of the tracking surface in the peripheral device in attachment of input device 2 to the peripheral device, excess of the separation distance between mouse operation sensor 274 and the tracking surface over the second distance can be suppressed. Therefore, mouse operation sensor 274 can output an accurate signal about movement also with respect to the tracking surface of the peripheral device. By way of example, the second separation distance in attachment of input device 1 to peripheral device 3 is configured to be intermediate between the median value and the second distance.

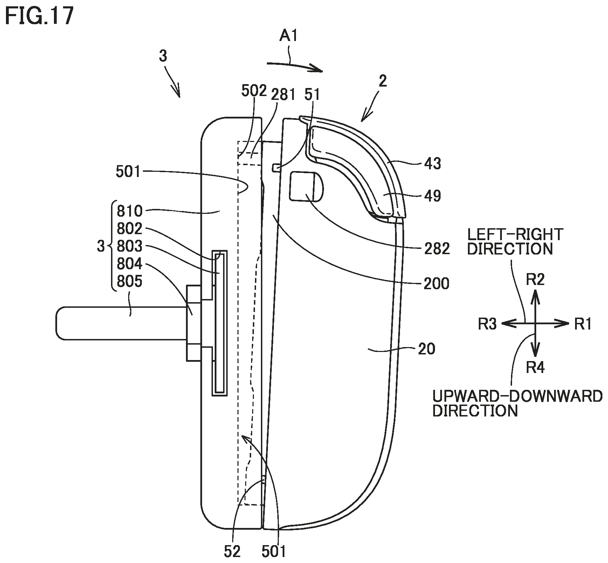

Fig. 17 is a schematic rear view showing a state of removal of the second input device from peripheral device 3. Initially, the user operates pusher operation portion 282. Pusher 281 thus projects from the top surface of projection 200 of second input device 2. In other words, pusher 281 projects from the top surface of projection 200 in accordance with the operation by the user. Recess 500 is provided with recess bottom surface 501. Projecting pusher 281 abuts on an abutment area 502 which is a part of recess bottom surface 501. Projecting pusher 281 is not inserted in second opening 807.

As pusher 281 pushes abutment area 502 as shown in Fig. 17, projection 200 of second input device 2 moves in the direction away from recess 500 of peripheral device 3. Peripheral device 3 rotates in a direction shown with an arrow A1. Projection 200 of input device 2 thus moves away from recess 500 of peripheral device 3. Peripheral device 3 includes first projecting body 51 and second projecting body 52 located at the outer peripheral surface of projection 200. First projecting body 51 is located at a side of second direction R2. Second projecting body 52 is located at a side of fourth direction R4. When pusher 281 projects, a part of at least one (second projecting body 52) of first projecting body 51 and second projecting body 52 is kept accommodated in recess 500. The other (first projecting body 51), on the other hand, is completely exposed through recess 500. When pusher 281 projects, both of first projecting body 51 and second projecting body 52 may completely be exposed through recess 500, or at least parts of both of first projecting body 51 and second projecting body 52 may be kept accommodated in recess 500.

Fig. 17 shows a state in which pusher 281 that has fully projected abuts on abutment area 502. Recess 500 may be configured such that mouse operation sensor 274 is unable to detect movement of tracking part 803 in this state. Specifically, while pusher 281 that has fully projected abuts on abutment area 502, the distance between mouse operation sensor 274 and tracking part 803 may be longer than the second distance. A case where mouse operation sensor 274 is unable to detect movement of tracking part 803 includes a case where the mouse operation sensor is unable to detect movement because of a long distance between mouse operation sensor 274 and tracking part 803 and a case where the mouse operation sensor is unable to detect movement because of position displacement between first opening 270 and second opening 807.

Peripheral device 3 according to the present embodiment includes recess 500 with which the projection is to attachably and removably be matched, tracking part 803 motion of which is detected by mouse operation sensor 274 of the input device attached to peripheral device 3, and operation part 806 configured to cause motion of tracking part 803 by being operated by the user. Novel peripheral device 3 that uses mouse operation sensor 274 for input can thus be provided.

Peripheral device 3 according to the present embodiment includes, at the bottom of recess 500, second opening 807 opposed to the first opening of the projection matched with recess 500. At least a part of tracking part 803 is located inside peripheral device 3 and detected by mouse operation sensor 274 through second opening 807. Since tracking part 803 is located inside peripheral device 3, tracking part 803 tends to be protected and tracking part 803 can be detected through second opening 807.

According to peripheral device 3 according to the present embodiment, tracking part 803 rotates in accordance with the operation on operation part 806. Thus, as compared with an example of linear movement of tracking part 803 in detection of an amount of movement in one direction, peripheral device 3 more compact in configuration can be obtained. For example, with a structure free from restriction on a range of rotation, tracking part 803 can be moved substantially indefinitely in one direction with respect to a mouse sensor.

According to peripheral device 3 according to the present embodiment, the surface where incident light is reflected is the surface that intersects rotation axis X. A thickness of peripheral device 3 in the depth direction of recess 500 can thus be smaller than in an example where the surface where incident light is reflected is the outer circumferential surface around rotation axis X.

According to peripheral device 3 according to the present embodiment, input device 2 includes buttons 41 and 42 located at the top surface of projection 200. Buttons 41 and 42 are each a member configured to be attracted to the magnet. At the bottom of recess 500, a member configured to be attracted to button 41 or 42 is located. Attachment and removal between the input device and peripheral device 3 is thus facilitated.

According to peripheral device 3 according to the present embodiment, input device 2 includes pusher 281 configured to project from the top surface of projection 200 in accordance with the operation by the user. Recess 500 is provided with abutment area 502 of recess bottom surface 501, abutment area 502 being configured to abut on pusher 281. Attachment and removal between input device 2 and peripheral device 3 is thus facilitated.

According to peripheral device 3 according to the present embodiment, recess 500 is configured such that mouse operation sensor 274 is unable to detect movement of tracking part 803 while pusher 281 that has fully projected abuts on abutment area 502. Operation on peripheral device 3 while attachment and removal between input device 2 and peripheral device 3 is incomplete can be suppressed.

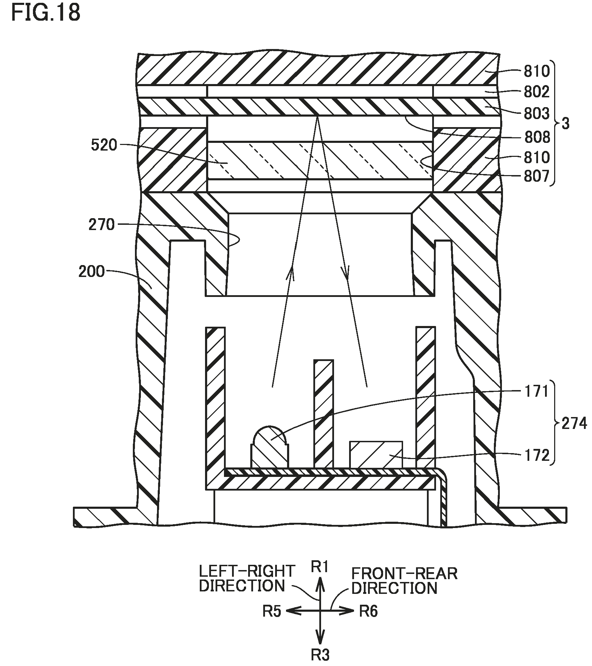

Fig. 18 is a schematic cross-sectional view showing a configuration in which the input device has been attached to peripheral device 3 according to a modification of the first embodiment.

As shown in Fig. 18, peripheral device 3 may include lens 520. Lens 520 is, for example, a condensing lens or a polarization lens. Lens 520 is located between second opening 807 and tracking part 803. Lens 520 may be located in second opening 807 or in the rear of second opening 807. Lens 520 may be located inside or outside main body portion 810. A part of lens 520 may be located out of second opening 807.

According to peripheral device 3 according to the present modification, lens 520 is located between second opening 807 and tracking part 803. Therefore, even when the distance between tracking part 803 and mouse operation sensor 274 is long, light from mouse operation sensor 274 can be condensed or polarized by lens 520. Consequently, detection accuracy of mouse operation sensor 274 can be improved. For example, in the present modification, the second separation distance may be longer than the second distance.

### (Second Embodiment)

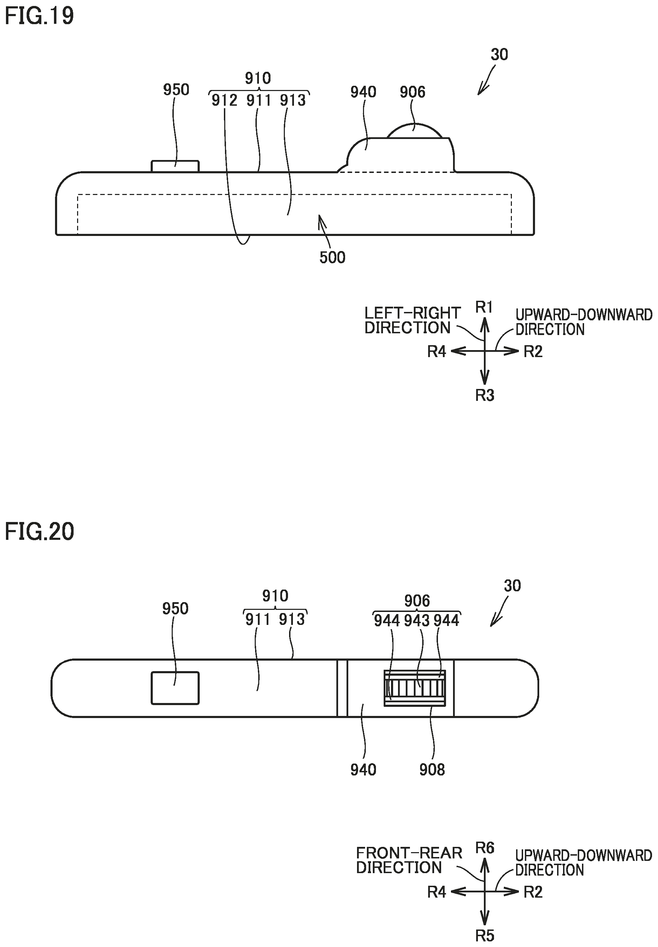

A configuration of a peripheral device 30 according to a second embodiment will now be described. Fig. 19 is a schematic front view showing the configuration of peripheral device 30 according to the second embodiment. Fig. 20 is a schematic plan view showing the configuration of peripheral device 30 according to the second embodiment.

As shown in Figs. 19 and 20, peripheral device 30 mainly includes a main body portion 910, an operation part 906, a projecting member 940, and an operation button 950.

Main body portion 910 includes a main body portion top surface 911, a main body portion bottom surface 912, and a main body portion outer peripheral surface 913. Main body portion outer peripheral surface 913 is contiguous to each of main body portion top surface 911 and main body portion bottom surface 912. Recess 500 is located at main body portion bottom surface 912. Recess 500 of peripheral device 30 according to the second embodiment is similar in configuration to recess 500 of peripheral device 3 according to the first embodiment. The longitudinal direction of recess 500 corresponds to the longitudinal direction of projection 100. Projecting member 940 is located on main body portion top surface 911. Projecting member 940 is provided with an operation part arrangement hole 908.

Operation part 906 is located at operation part arrangement hole 908. A part of operation part 906 is located outside operation part arrangement hole 908. The user can operate operation part 906. Operation button 950 is located at main body portion top surface 911. The user can operate operation button 950. Operation button 950 is configured to be pressed by the user. Operation part 906 and operation button 950 are located as being aligned in the longitudinal direction of recess 500. Operation part 906 includes a third gear 943 and a disc member 944. In the front-rear direction, disc member 944 is located at each of opposing sides of third gear 943. Third gear 943 is, for example, a dial gear.

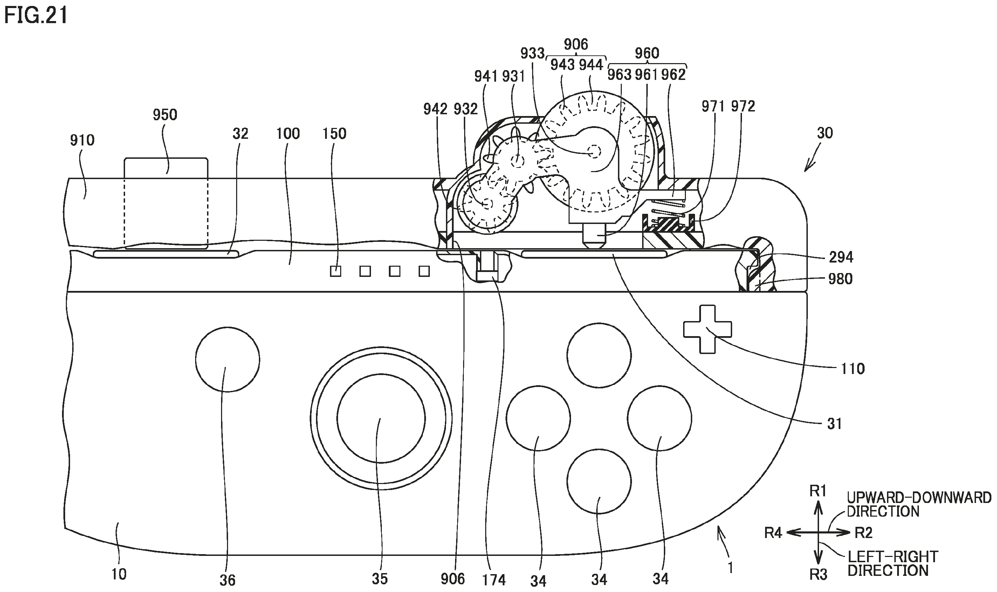

Fig. 21 is a partial schematic cross-sectional view showing a configuration of system 4 according to the second embodiment. The cross-section shown in Fig. 21 is in parallel to each of the depth direction of recess 500 and the longitudinal direction of recess 500. As shown in Fig. 21, first input device 1 is attached to peripheral device 30 according to the second embodiment.

As shown in Fig. 21, peripheral device 30 further includes a first gear 941, a second gear 942, a first rotation shaft 931, a second rotation shaft 932, a third rotation shaft 933, a holder 960, a biasing member 971, and a support member 972. First gear 941 is rotatable around first rotation shaft 931. Second gear 942 is rotatable around second rotation shaft 932. Operation part 906 is rotatable around third rotation shaft 933. Operation part 906 is combined with first gear 941. As operation part 906 rotates, first gear 941 rotates. Second gear 942 is combined with first gear 941. As first gear 941 rotates, second gear 942 rotates.

Holder 960 is attached to first rotation shaft 931, second rotation shaft 932, and third rotation shaft 933. First rotation shaft 931, second rotation shaft 932, and third rotation shaft 933 are integrated by holder 960. As shown in Fig. 21, when viewed along the direction of the short side of recess 500, holder 960 is located to intersect with each of first rotation shaft 931, second rotation shaft 932, and third rotation shaft 933. Holder 960 is rotatable around a rotation axis the same as that of second rotation shaft 932. Second rotation shaft 932 is supported, for example, by main body portion 910.

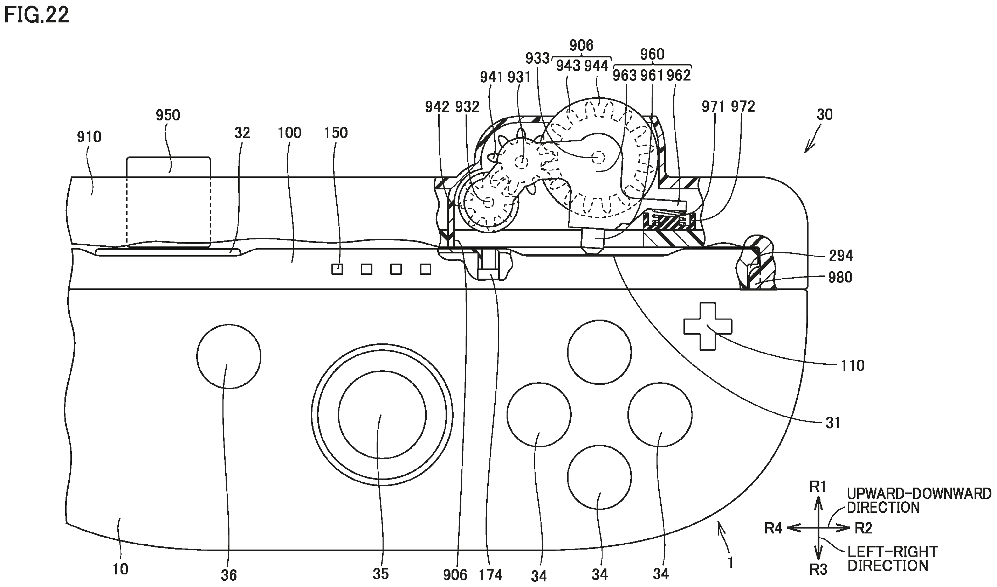

Fig. 22 is a partial schematic cross-sectional view showing a state in which operation part 906 has been pressed. The cross-section shown in Fig. 22 is the same as the cross-section shown in Fig. 21. Fig. 21 shows a state in which operation part 906 is not pressed.

As shown in Fig. 22, holder 960 includes a coupling member 963, a pressing part 961, and a biased member 962. Coupling member 963 couples first rotation shaft 931, second rotation shaft 932, and third rotation shaft 933. Pressing part 961 is contiguous to coupling member 963. Pressing part 961 is opposed to first button 31. Pressing part 961 presses down first button 31 as operation part 906 is pressed. In the left-right direction, pressing part 961 is located between operation part 906 and first button 31.

Biasing member 971 is attached to support member 972. Biased member 962 is located on biasing member 971. Biased member 962 is biased by biasing member 971 toward main body portion top surface 911. Biased member 962 is contiguous to coupling member 963.

As shown in Fig. 21, while operation part 906 is not pressed, biased member 962 is pressed by biasing member 971 against an inner wall surface of main body portion 910. As shown in Fig. 22, while operation part 906 is pressed, on the other hand, biased member 962 moves away from the inner wall surface of main body portion 910. Biasing member 971 contracts by being pushed by biased member 962. As operation part 906 is pressed, holder 960 together with operation part 906 moves in a direction toward first button 31. Pressing part 961 of holder 960 thus presses down first button 31 of the input device. When the user no longer presses down operation part 906, pressing part 961 moves in a direction away from first button 31. As set forth above, operation part 906 is configured to be pushed and turned by the user.

Operation button 950 is located at main body portion 910. Operation button 950 is pressed by the user. Operation button 950 is opposed to second button 32. As the user presses down operation button 950 of peripheral device 30, second button 32 of input device 1 is pressed.

Peripheral device 30 includes an engagement element 980. Engagement element 980 projects, for example, from an inner peripheral surface of main body portion 910 that defines recess 500. Engagement element 980 of peripheral device 30 is engaged with an engagement hole 294 of input device 1.

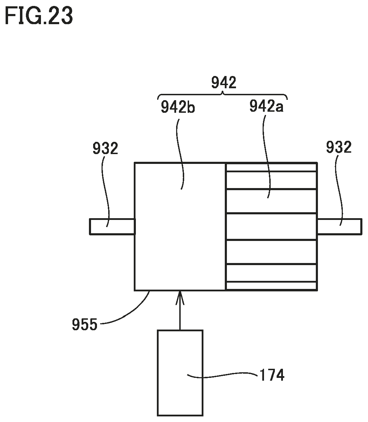

Fig. 23 is a schematic diagram showing a configuration of second gear 942. Second gear 942 includes a gear member 942a and a cylindrical member 942b. Cylindrical member 942b is contiguous to gear member 942a. Cylindrical member 942b and gear member 942a rotate around second rotation shaft 932. Cylindrical member 942b is a rotating body configured to rotate around second rotation shaft 932. Cylindrical member 942b is provided with an outer peripheral surface 955 located at a radially outer periphery of the rotating body. Cylindrical member 942b corresponds to the tracking part. Outer peripheral surface 955 of cylindrical member 942b corresponds to the tracking surface of the tracking part.

As shown in Figs. 21 and 23, mouse operation sensor 174 is opposed to second gear 942. Specifically, mouse operation sensor 174 is opposed to outer peripheral surface 955 of cylindrical member 942b which is the tracking part. Incident light from mouse operation sensor 274 passes through a second opening 907 of peripheral device 30. Outer peripheral surface 955 of cylindrical member 942b which is the tracking part is configured to reflect incident light from second opening 907.

According to peripheral device 30 according to the present embodiment, first button 31 can be pressed by pressing operation part 906, and as outer peripheral surface 955 of second gear 942 rotates with rotation of operation part 906, mouse operation sensor 174 can detect relative movement of the tracking surface (outer peripheral surface 955). Therefore, a single first operation part can be used to perform two types of different input operations. First button 31 and first opening 170 are located at different positions with respect to the longitudinal direction of projection 100. Use of a plurality of gears enables input to first button 31 and input to mouse operation sensor 174.

According to peripheral device 30 according to the present embodiment, cylindrical member 942b which is the tracking part is provided with outer peripheral surface 955 of the rotating body configured to rotate around second rotation shaft 932. Outer peripheral surface 955 is configured to reflect incident light from second opening 807. The thickness of peripheral device 30 in the direction perpendicular to the depth direction of recess 500 can thus be smaller than in an example where the tracking surface where incident light is reflected is the surface that intersects the rotation axis.

### (Modification of Second Embodiment)

Holder 960 (in particular, pressing part 961) or operation button 950 may be a magnet.

The outer peripheral surface of gear member 942a may be used as the tracking surface.

Though second gear 942 is tracked by rotation of second gear 942 by rotation of third gear 943 of operation part 906 in the above example, rotation of operation part 906 may directly be tracked. In this case, operation part 906 is arranged directly above first opening 170. At this time, input to press operation part 906 may be transmitted to press first button 31, for example, by an appropriate leverage structure.

A structure that realizes pressing and detection of rotation is not limited to the above.

### (Other Modifications)

Peripheral device 3 does not have to include a magnet. In this case, an engagement element of peripheral device 3 may be engaged with an engagement hole in the input device to fix peripheral device 3 and the input device.

Peripheral device 3 may include a magnet and an engagement element. In this case, the engagement element of peripheral device 3 may be engaged with the engagement hole in the input device and the magnet of peripheral device 3 may attract the button of the input device to fix peripheral device 3 and the input device.

Peripheral device 3 or 30 may include a terminal. By electrically connecting the terminal of peripheral device 3 or 30 to the terminal of the input device, peripheral device 3 or 30 may communicate with the input device.

In peripheral device 3 or 30, a size of the second opening is not limited. The second opening may be located, for example, over the entirety in a direction orthogonal to the longitudinal direction of the recess bottom surface.

Peripheral device 3 or 30 does not have to include the second opening. In this case, the tracking part may be located between the recess bottom surface and the top surface of the projection.

Peripheral device 3 or 30 does not have to include the recess. Peripheral device 3 or 30 may include as an attachment structure, for example, a frame-like portion in which the projection is to be inserted.

The tracking part of peripheral device 3 may make motion different from rotation. For example, the tracking part may make linear reciprocating motion.

Peripheral device 30 does not have to include the pressing part configured to press the button by pressing of the operation part.

It should be understood that embodiments disclosed herein are illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 first input device, input device
2 second input device, input device
3, 30 peripheral device
4 system
10 controller housing
11 first side surface
12, 212 upper surface
13 second side surface
14 lower surface
15, 215 front surface
16 rear surface
17 housing opening
31, 41 first button, button
32, 42 second button, button
33, 43 third operation part
34, 44 fourth operation part
35, 45 fifth operation part
36 sixth operation part
39, 49 ninth operation part
48 eighth operation part
51 first projecting body
52 second projecting body
61 front-surface-side housing
62 rear-surface-side housing
71 first synchronization button
72 second synchronization button
100, 200 projection
101 first area
102 second area
103 third area
104 fourth area
105 fifth area
106 top surface
107, 955 outer peripheral surface
110 + button
150, 250 light emission portion
160 first terminal
170, 270 first opening
171 light source
172 light reception sensor
174, 274 mouse operation sensor
181, 281 pusher
182, 282 pusher operation portion
191 first mouse skate member
192 second mouse skate member
193 first engagement hole
194 second engagement hole
196 terminal opening
210 - button
211 side surface
253 third mouse skate member
254 fourth mouse skate member
260 second terminal
294 engagement hole
300 game device
301 audio input and output terminal
302 upper terminal
303 lower terminal
304 storage medium slot
305 display
307 power button
310, 320 game device recess
311 base surface
313 main body right side surface
314 main body left side surface
315 main body front surface
330 first plug connector
331 main body first terminal
334 shoulder screw
338 cover member
340 second plug connector
341 main body second terminal
410 first magnetic element
420 second magnetic element
430 third magnetic element
440 fourth magnetic element
500 recess
501 recess bottom surface
502 abutment area
511 first magnet
512 second magnet
520 lens
802 tracking part arrangement hole
803 tracking part
804 connection member
805 handle
806, 906 operation part
807, 907 second opening
808 tracking surface
810, 910 main body portion
811, 911 main body portion top surface
812, 912 main body portion bottom surface
813, 913 main body portion outer peripheral surface
813a first outer peripheral surface portion
813b second outer peripheral surface portion
814 main body portion inner peripheral surface
908 operation part arrangement hole
931 first rotation shaft
932 second rotation shaft
933 third rotation shaft
940 projecting member
941 first gear
942 second gear
942a gear member
942b cylindrical member
943 third gear
944 disc member
950 operation button
960 holder
961 pressing part
962 biased member
963 coupling member
971 biasing member
972 support member
980 engagement element
1000 information processing apparatus
3120 game-device-side inner peripheral surface
3121 game-device-side bottom surface
A1 arrow
F tracking surface
R1 first direction
R2 second direction
R3 third direction
R4 fourth direction
R5 fifth direction
R6 sixth direction
X rotation axis

## Claims

1. A peripheral device to which an input device is removably attachable, the input device comprising a projection, the projection projecting from a side surface and being removably attachable to a game device recess located at a game device, the projection being provided with a first opening at a top surface, the input device comprising a mouse operation sensor configured to detect through the first opening, movement with respect to a tracking surface to which the top surface is opposed, the peripheral device comprising:
a recess with which the projection is to removably be matched;
a tracking part motion of which is detected by the mouse operation sensor of the input device attached to the peripheral device; and
an operation part configured to cause motion of the tracking part by being operated by a user.

2. The peripheral device according to claim 1, wherein
a second opening opposed to the first opening of the projection matched with the recess is located at a bottom of the recess, and
at least a part of the tracking part is located inside the peripheral device and detected by the mouse operation sensor through the second opening.

3. The peripheral device according to claim 2, wherein
the tracking part rotates in accordance with an operation on the operation part.

4. The peripheral device according to claim 3, wherein
the tracking part is provided with a surface that intersects a rotation axis, and
incident light from the second opening is reflected at the surface.

5. The peripheral device according to claim 3, wherein
the tracking part is provided with a surface of a radially outer periphery of a rotating body that rotates around a rotation axis, and
incident light from the second opening is reflected at the surface.

6. The peripheral device according to any of claims 1 to 5, wherein
the input device comprises a button located at the top surface of the projection,
the operation part is configured to be pushed and turned by the user, and
the peripheral device comprises a pressing part configured to press the button as a result of pressing of the operation part.

7. The peripheral device according to claim 6, wherein
the button is a member configured to be attracted to a magnet, and
a member to be attracted to the button is located at a bottom of the recess.

8. The peripheral device according to any of claims 1 to 5, wherein
the input device comprises a button located at the top surface of the projection,
the button is a member to be attracted to a magnet, and
a member to be attracted to the button is located at a bottom of the recess.

9. The peripheral device according to any of claims 1 to 5, wherein
the input device comprises a pusher configured to project from the top surface of the projection in accordance with an operation by the user, and
the recess is provided with an abutment area of a recess bottom surface, the abutment area being configured to abut on the pusher.

10. The peripheral device according to claim 9, wherein
the recess is configured such that the mouse operation sensor is unable to detect movement of the tracking part while the pusher that has fully projected abuts on the abutment area.

11. The peripheral device according to any of claims 2 to 5, wherein
a lens is located between the second opening and the tracking part.

12. A system comprising the peripheral device according to any of claims 1 to 11; and
the input device to be attached to the peripheral device.
